# EUROPÄISCHE PATENTSCHRIFT

(11) **EP 2 431 696 B1**
(45) Veröffentlichungstag und Bekanntmachung des Hinweises auf die Patenterteilung: **18.03.2015**
(21) Anmeldenummer: 11007372.3
(22) Anmeldetag: 09.09.2011
(51) Int. Cl.: F27B 11/00, F27D 17/00, F27D 99/00, F23C 7/00, F23C 9/00

(54) **Verfahren und Einrichtung zum Beheizen eines Industrieofens**
Method and device for heating an industrial oven
Procédé et dispositif destinés au chauffage d'un four industriel

(30) Priorität: 15.09.2010 DE 102010045426
(43) Veröffentlichungstag der Anmeldung: 21.03.2012
(73) Patentinhaber: LOI Thermprocess GmbH, 45141 Essen (DE)
(72) Erfinder: Maschler, Frank, 47279 Duisburg (DE); Velten, Georg, 45327 Essen (DE); Wachholder, Horst, 45277 Essen (DE); Wendt, Peter, 45276 Essen (DE)
(74) Vertreter: Harlacher, Mechthild

(56) Entgegenhaltungen:
- WO-A2-2008/042075
- JP-A- 8 210 779
- CHOI G-M ET AL: "Advanced low NOx combustion using highly preheated air", ENERGY CONVERSION AND MANAGEMENT, ELSEVIER SCIENCE PUBLISHERS, OXFORD, GB, Bd. 42, Nr. 5, 1. März 2001 (2001-03-01), Seiten 639-652, XP004236258, ISSN: 0196-8904, DOI: 10.1016/S0196-8904(00)00074-1

## Beschreibung

Die Erfindung betrifft ein Verfahren und eine Einrichtung zum Beheizen eines Haubenofens, zum Wärmebehandeln von Glühgut in einem von einer Schutzhaube gebildeten Ofenraum, wobei die Schutzhaube mit Abstand von einer Heizhaube umgeben wird, so dass ein ringspaltförmiger Heizraum zwischen Schutzhaube und Heizhaube ausbildet wird, wobei der Haubenofen durch Verbrennen eines Brennstoffs beheizt wird, mit mindestens einem Brenner, der eine erste Brennstoffzuführung, eine Verbrennungsluftzuführung, eine Zündeinrichtung und einen Brennerauslass aufweist, welcher in einem Heizraum des Haubenofens mündet, wobei dem mindestens einem Brenner in einem ersten Betriebszustand Brennstoff mittels der ersten Brennstoffzuführung und Verbrennungsluft mittels der Verbrennungsluftzuführung zugeführt und das Brennstoff-/Verbrennungsluftgemisch mittels der Zündeinrichtung gezündet wird und wobei das Verbrennungsabgas aus dem Brennerauslass in einen ringförmigen Heizraum des Haubenofens strömt,

Für Hochtemperaturprozesse sind in der Vergangenheit unterschiedliche Verfahren entwickelt worden, um die NOx-Emissionen zu reduzieren. Hohe Verbrennungstemperaturen begünstigen die NOx-Bildung, so dass bei hohen Verbrennungstemperaturen die NOx-Bildung im Abgas relativ groß ist. Es sind Verfahren zur NOx -armen Verbrennung bei Hochtemperaturprozessen bekannt, bel denen der Brenner in zwei verschiedenen Betriebszuständen arbeitet.

Aus der EP 0 685 683 A2 ist ein Hochgeschwindigkeitsbrenner bekannt, der unterhalb eines vorgegebenen Umschaltgrenzwertes, insbesondere zum Starten des Brenners und zum Aufheizen des Ofenraums in einem ersten Betriebszustand arbeitet. In dem ersten Betriebszustand wird einer Brennkammer, die Bestandteil des Brenners ist, über eine erste Brennstoffzuführung Brennstoff zugeführt. Die Brennstoffzuführung endet im Wesentlichen auf der gleichen Höhe wie eine Verbrennungsluftzuführung in der Brennkammer. In dieser wird der Brennstoff mit der zugeführten Verbrennungsluft vermischt und das entstehende Gemisch über eine Zündelektrode gezündet. Die Brennkammer weist einen düsenförmigen Auslass auf, der in einen Ofenraum eines Industrieofens gerichtet ist. In dem ersten Betriebszustand strömt Verbrennungsabgas mit hoher Geschwindigkeit aus dem Auslass der Brennkammer in den Ofenraum und heizt diesen auf.

Oberhalb des Umschaltgrenzwertes wird in einen zweiten Betriebszustand des Brenners geschaltet, in dem eine flammenlose Oxidation des Brennstoffs im Ofenraum statt. In dem zweiten Betriebszustand wird die erste Brennstoffzuführung geschlossen und eine zweite Brennstoffzuführung geöffnet. Die zweite Brennstoffzuführung in Form einer Lanze endet in der Brennkammer vor bzw. stromauf des düsenförmigen Auslasses der Brennkammer. In dem zweiten Betriebszustand strömt aus dem Auslass des Brenners parallel zu dem Brennstoff Verbrennungsluft mit hohem Austrittsimpuls in den Ofenraum und saugt dabei Verbrennungsabgase aus dem Ofenraum an.

Bei dem vorgenannten Verfahren treten hohen Austrittsgeschwindigkeiten auf, so dass zum Schutz der Faser-Auskleidung große Ofenräume erforderlich sind.

Bei Haubenöfen zum Hochtemperatur-Glühen von Metallband, Blech oder Draht, insbesondere Stahlband in Form von Coils unter Schutzgas bzw. in einer Schutzgasatmospäre wird die Charge von einer Schutzhaube abgedeckt und auf diese Weise ein Glühraum ausgebildet. Die Schutzhaube wird mit Abstand von einer Heizhaube umgeben, so dass sich zwischen Schutzhaube und Heizhaube ein im Querschnitt ringsspaltförmiger Heizraum gebildet. Der Heizraum ist verhältnismäßig klein, so dass im Auftreffbereich des Brennerstrahls eine aufwändige Steinauskleidung erfordern ist.

Die derzeit üblichen Heizhauben bei Haubenglühanlagen für Stahlband besitzen eine Wärmerückgewinnung durch Lufterwärmung mit einem Rekuperator je Brenner oder mit einem zentralen Rekuperator und erreichen Warmlufttemperaturen von 350 bis 450 °C.

Die NOx-Emissionen von Brennern, die mit Erdgas betrieben werden liegen bei ca. 150 mg/m³. Die NOx-Emissionen unterschreiten zwar die derzeit geltenden Grenzwerte ("1/2 TA-Luft" ca. 250 mg/m³), überschreiten aber die im internationalen Vergleich schärfsten Normen von ca. 100 mg/m³.

Demgemäß liegt der Erfindung die Aufgabe zu Grunde, hier Abhilfe zu schaffen und eine energiesparende Beheizungsmöglichkeit zu schaffen, bei der die NOx-Emissionen gering sind und die für den Einsatz bei Haubenöfen mit kleinen Brennräumen geeignet ist.

Diese Aufgabe wird durch ein Verfahren mit den Merkmalen des Anspruchs 1 gelöst.

Erfindungsgemäß wird bei Temperaturen im Heizraum oberhalb eines Grenzwertes in einem zweiten Betriebszustand des Brenners der Brennstoffdurchfluss in der ersten Brennstoffzuführung unterbrochen, so dass ausschließlich Verbrennungsluft aus dem Brenner in den Heizraum strömt. Gleichzeitig wird Brennstoff mittels einer zweiten Brennstoffzuführung in den Heizraum in Richtung auf den Verbrennungsluftstrom, weitgehend rechtwinklig, unter einem Winkel zwischen 60° und 120° zur Achse des Verbrennungsluftstromes eingedüst und im Heizraum flammenlos oxidiert.

Die Lösung ermöglicht insbesondere einen Umbau vorhandener Heizhauben zum Zweck der NOx-Reduzierung und der Energieeinsparung.

Das Brenngas wird praktisch in vertikaler Richtung in den Verbrennungsluftstrorn, eingedüst. Prüfstandsversuche haben gezeigt, dass die hiermit erreichte Turbulenz ausreichend ist, um im Heizraum den Zustand der flammenlosen Oxidation zu erreichen. Aufgrund der flammenlosen Oxidation können die NOx-Emissionen in einen Bereich um 25 ppm gesenkt werden.

Nach einem weiteren Merkmal der Erfindung entspricht der Temperatur-Grenzwert mindestens der Zündtemperatur des Brennstoff Nerbrennungsluftgemisches.

Vorzugswelse beträgt die Austrittsgeschwindigkeit der Verbrennungsluft aus dem Brenner in den Heizraum mindestens 10 m/s.

Vorteilhafterweise beträgt die Austrittsgeschwindigkeit des Brennstoffs aus der zweiten Brennstoffzuführung in den Heizraum mindestens 40 m/s.

Nach der Erfindung wird die Verbrennungsluft in mindestens einem Rekuperator auf mindestens 600 °C vorgewärmt.

Die Erfindung befasst sich ferner mit einer Einrichtung zum Beheizen eines Haubenofens zum Wärmebehandeln von Glühgut in einem von einer Schutzhaube gebildeten Ofenraum, wobei die Schutzhaube mit Abstand von einer Heizhaube, umgeben wird, so dass ein ringspaltförmiger Heizraum zwischen Schutzhaube und Heizhaube ausbildet wird, wobei der Haubenofen durch Verbrennen eines Brennstoffs beheizt wird, mit mindestens einem Brenner, der eine erste Brennstoffzuführung, eine Verbrennungsluftzuführung, eine Zündeinrichtung und einen Brennerauslass aufweist, welcher in einem Heizraum des Haubenofens mündet und mit einer Steuereinrichtung zur Steuerung der Brennstoffzufuhr zu dem Brenner,.

Zur Lösung der Aufgabe ist die Einrichtung nach der Erfindung dadurch gekennzeichnet, dass die Steuereinrichtung so ausgebildet ist, dass bei Temperaturen oberhalb eines Grenzwertes der Temperatur im Heizraum in einem zweiten Betriebszustand die erste Brennstoffzuführung mittels eines Absperrorgans abgesperrt wird, so dass in den zweiten Betriebszustand ausschließlich Verbrennungsluft aus dem Brennerauslass in den Heizraum strömt, dass eine zweite Brennstoffzuführung mit mindestens einer Brennstoffaustrittsöffnung in dem Heizraum mündet, dass die Brennstoffaustrittsöffnung auf die Achse des Verbrennungsluftstrom gerichtet ist, derart dass Brennstoff in den Heizraum in Richtung auf den Verbrennungsluftstrom unter einem Winkel zwischen 60° und 120° zur Achse des Verbrennungsluftstromes eingedüst und im Heizraum flammenlos oxidiert wird.

Eine vorteilhafte Ausgestaltung der Erfindung besteht darin, dass die Brennstoffaustrittsöffnung und der in dem Heizraum mündende Brennerauslass in vertikaler Richtung beabstandet sind.

Vorzugsweise beträgt der vertikale Abstand (a) zwischen der Brennstoffaustrittsöffnung und der Mittelachse des Brennerauslasses bis zu 700 mm.

Vorteilhafterweise sind die Brennstoffaustrittsöffnung und der in dem Heizraum mündende Brennerauslass in horizontaler Richtung beabstandet.

Vorzugsweise beträgt der horizontale Abstand (b) zwischen der Brennstoffaustrittsöffnung und der Mittelachse des Brennerauslasses bis zu 1000 mm.

Die Erfindung schafft ferner eine Einrichtung zum Beheizen eines Haubenofens, dadurch gekennzeichnet, dass der Brennerauslass derart in dem Heizraum mündet, dass die Verbrennungsabgase oder die Verbrennungsluft im Wesentlichen waagerecht in den Heizraum strömen, dass die Brennstoffaustrittsöffnung der zweiten Brennstoffzuführung unterhalb des Brennerauslasses in dem Heizraum mündet, so dass der Brennstoffstrom nach oben gerichtet ist.

Die Erfindung wird im Folgenden anhand eines bevorzugten Ausführungsbeispiels der erfindungsgemäßen im Zusammenhang mit der Zeichnung näher erläutert.

Die Zeichnung zeigt in:

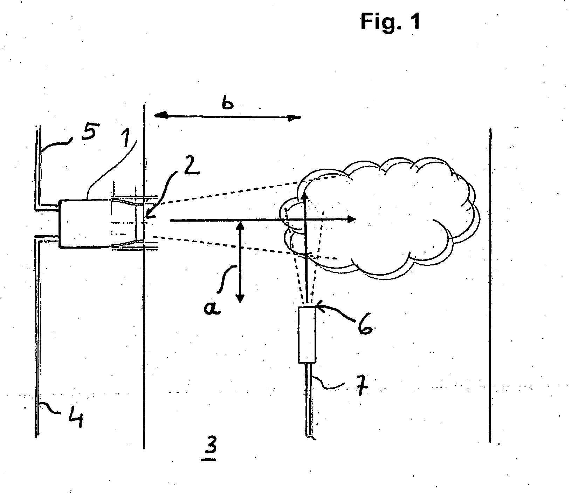

- Fig. 1: in schematischer Darstellung einer Einrichtung zum Beheizen eines Haubenofens.

In Fig. 1 ist schematisch ein mit Erdgas betriebener Mittelgeschwindigkeitsbrenner 1 dargestellt, der einen Brennerauslass 2 aufweist, welcher in einem ringspaltförmigen Heizraum 3 zwischen einer nicht dargestellten Schutzhaube und einer Heizhaube mündet. Der Brenner 1 weist eine erste Brennstoffzuführung 4 und eine Verbrennungsluftzuführung 5 auf. In dem Heizraum 3 mündet die Brennstoffaustrittsöffnung 6 einer zweiten Brennstoffzuführung 7. Unterhalb eines Grenz-wertes der Temperatur im Heizraum wird der Brenner 1 im konventionellen Betrieb mit nicht dargestellter Zündung und Flammenüberwachung betrieben. Der Grenzwert beträgt 750 °C. Im konventionellen Betrieb wird das Erdgas mit der Verbrennungsluft vermischt und das entstehende Gemisch über eine Zündelektrode gezündet.

Oberhalb von 750 °C wird durch die Brenner 1 nur Verbrennungsluft in den Heizraum 3 eingeblasen. Das Brenngas wird weitgehend rechtwinklig (60° bis 120°) zur Achse des Verbrennungsluftstroms in diesen eingedüst, praktischerweise in vertikaler Richtung.

Prüfstandsversuche haben gezeigt, dass die hiermit erreichte Turbulenz ausreichend ist, um den Zustand der flammenlosen Oxidation zu erreichen. Der Abstand b in horizontaler Richtung zwischen dem Brennerauslass 2 und dem Kreuzungspunkt der Achsen des Verbrennungsluftstroms und des Brennstoffstroms aus der Brennstoffaustrittsöffnung 6 kann bis zu 1000 mm betragen. Der vertikale Abstand a zwischen der Brennstoffaustrittsöffnung 6 und dem Kreuzungspunkt mit der Achse des Verbrennungsluftstromes beträgt bis zu 700 mm. Die Austrittsgeschwindigkeit der Verbrennungsluft beträgt mindestens 10 m/s, die Austrittsgeschwindigkeit des Brennstoffs aus der Brennstofföffnung 6 mindestens 40 m/s. Größere Geschwindigkeiten sind unkritisch. Die Verbrennungsluft wird in mindestens einem Rekuperator auf mindestens 600 °C vorgewärmt.

Im Rahmen der Erfindung sind ohne weiteres Abwandlungen möglich. Die Wirkung bleibt erhalten, wenn die Abstände a und b beliebig klein werden.

## Patentansprüche

1. Verfahren zum Beheizen eines Haubenofens zum Wärmebehandeln von Glühgut in einem von einer Schutzhaube gebildeten Ofenraum, wobei die Schutzhaube mit Abstand von einer Heizhaube umgeben wird, so dass ein ringspattförmiger Heizraum (3) zwischen Schutzhaube und Heizhaube ausgebildet wird, wobei der Haubenofen durch Verbrennen eines Brennstoffs beheizt wird, mit mindestens einem Brenner (1), der eine erste Brennslofhuführung (4), eine Verbrerinungsluftzuführung (5), eine Zündeinrichtung und einen Brennerauslass (2) aufweist, welcher in einem Heizraum (3) des Haubenofens mündet, wobei dem mindestens einem Brenner (1) in einem ersten Betriebszustand Brennstoff mittels der ersten Brennstoffzuführung (1) und Verbrennungsluft mittels der Verbrennungsluftzuführung (5) zugeführt und das Brennstoff-Verbrennungsluftgemisch mittels der Zündeinrichtung gezündet wird und wobei das Verbrennungsabgas aus dem Brenneraurlass (2) in den Heizraum des Haubenofens strömt,
**dadurch gekennzeichnet,**
**dass** bei Temperaturen im Heizraum (3) oberhalb eines Grenzwertes in einem zweiten Betriebszustand der Brennstoffdurchfluss in der ersten Brennstoffzuführung (4) unterbrochen wird, so dass ausschließlich Verbrennungsluft aus dem Brennerauslass (2) In den Heizraum (3) strömt, dass Brennstoff mittels einer zweiten Brennstoffzuführung (7) in den Heizraum (3) in Richtung auf den Verbrennungsluftstrorn unter einem Winkel zwischen 60° und 120° zur Achse des Verbrennungsluftstromes eingedüst und im Heizraum flammenlos oxidiert wird.

2. Verfahren nach Anspruch 1,
**dadurch gekennzeichnet**, der Grenzwert mindestens der Zündtemperatur des Brennstoff-/Verbrennungsluftgemisches entspricht.

3. Verfahren nach Anspruch 1 oder 2,
**dadurch gekennzeichnet, dass** die Austrittsgeschwindigkeit der Verbrennungsluft aus dem Brenner In den Heizraum mindestens 10 m/s beträgt.

4. Verfahren nach einem der Ansprüche 1 bis 3,
**dadurch gekennzeichnet**, das die Austrittsgeschwindigkeit des Brennstoffs aus der zweiten Brennstoffzuführung in den Heizraum mindestens 40 m/s beträgt.

5. Verfahren nach einem der Ansprüche 1 bis 4,
**dadurch gekennzeichnet, dass** die Verbrennungsluft in mindestens einem Rekuperator auf mindestens 600 °C vorgewärmt wird.

6. Einrichtung zum Beheizen eines Haubenofens zum Wärmebehandeln von Glühgut in einem von einer Schutzhaube gebildeten Ofenraum, wobei die Schutzhaube mit Abstand von einer Heizhaube umgeben wird, so dass ein ringspaltförmiger Heizraum (3) zwischen Schutzhaube und Heizhaube ausbildet wird, wobei der Haubenofen durch Verbrennen eines Brennstoffs beheizt wird, mit mindestens einem Brenner (1), der eine erste Brenristoffzuführung (4), eine Verbrennungsluftzuführung (5), eine Zündeinrichtung und einen Brennerauslass (2) aufweist, welcher in einem Helzraum (3) des Haubenofens mündet und mit einer Steuereinrichtung zur Steuerung der Brennstoffzufuhr zu dem Brenner, **dadurch gekennzeichnet,**
**dass** die Steuereinrichtung so ausgebildet ist, dass oberhalb eines Grenzwertes der Temperatur im Heizraum (3) in einem zweiten Betriebszustand die erste Brennstoffzuführung (4) mittels eines Absperrorgans abgesperrt wird, so dass in dem zweiten Betriebszustand ausschließlich Verbrennungsluft aus dem Brennerauslass (2) in den Heizraum (3) strömt, dass eine zweite Brennstoffzuführung (7) mit mindestens einer Brennstoffaustrittsöffnung (6) in dem Heizraum (3) mündet, dass die Brennstoffaustrittsöffnung (6) auf die Achse des Verbrennungsluftstroms aus dem Brennerauslass (2) gerichtet ist, derart, dass Brennstoff in den Heizraum (3) in Richtung auf den Verbrennüngsluttstrom unter einem Winkel zwischen 60° und 120° zur Achse des Verbrennungsluftstromes eingedüst wird um im Heizraum (3) flammenlos zu oxidieren.

7. Einrichtung nach Anspruch 6,
**dadurch gekennzeichnet, dass** sich zwischen der Brennstoffaustrittsöffnung (6) und dem Brennerauslass (2) ein, bezogen auf die Mittelachse des Brennerauslasses (2) vertikaler Abstand (a) befindet.

8. Einrichtung nach Anspruch 7,
**dadurch gekennzeichnet**, der vertikale Abstand (a) zwischen der Brennstoffaustrittsöffnung (6) und der Mittelachse des Brennerauslasses (2) bis zu 700 mm beträgt.

9. Einrichtung nach einem der Ansprüche 6 bis 8,
**dadurch gekennzeichnet, dass** sich zwischen dem in den Heizraum mündenden Brennerauslass (2) und dem Kreuzungspunkt der Achsen des Verbrennungsluftstroms aus dem Brennerauslass (2) und dem Brennstoffstrom aus der Brennstoffaustrittsöffnung (6) ein horizontaler Abstand (b) befindet.

10. Einrichtung nach Anspruch 9.
**dadurch gekennzeichnet, dass** der horizontale Abstand (b) bis zu 1000 mm beträgt.

11. Einrichtung nach einem der Ansprüche 6 bis 10,
**dadurch gekennzeichnet, dass** der Brennerauslass (2) derart in dem Heizraum (3) mündet, dass die Verbrennungsabgase oder die Verbrennungsluft waagerecht in den Heizraum (3) strömen, dass die Brennstoffaustrittsöffnung (6) der zweiten Brennstoffzuführung (7) unterhalb des Brennerauslasses (2) in dem Heizraum (3) mündet, so dass der Brennstoffstrom nach oben gerichtet ist.

## Claims

1. Method for heating a hood furnace for the heat treatment of annealing material in a furnace chamber formed by a protective hood, wherein the protective hood is surrounded at a distance by a heating hood so that an annular heating chamber (3) is formed between the protective hood and the heating hood, the hood furnace being heated by the combustion of a fuel with at least one burner (1) which exhibits a first fuel supply (4), a combustion air supply (5), an ignition device and a burner outlet (2), which ends in a heating chamber (3) of the hood furnace, the at least one burner (1) being supplied in a first operating mode with fuel by means of the first fuel supply (7) and by combustion air by means of the combustion air supply (5) and the fuel/combustion air mixture being ignited by means of the ignition device and the combustion exhaust gas flowing out of the burner outlet (2) into the heating chamber of the hood furnace,
**characterised in that**
at temperatures in the heating chamber (3) above a threshold value the fuel flow in the first fuel supply (4) is, in a second operating mode, interrupted so that only combustion air from the burner outlet (2) flows into the heating chamber (3), that fuel is injected by means of a second fuel supply (7) into the heating chamber (3) in the direction onto the combustion air flow at an angle of between 60° and 120° relative to the axis of the combustion air flow and is oxidised in a flameless way in the heating chamber.

2. Method according to claim 1,
**characterised in that** the threshold value corresponds to at least the ignition temperature of the fuel/combustion air mixture.

3. Method according to either claim 1 or 2,
**characterised in that** the outlet velocity of the combustion air from the burner into the heating chamber is at least 10 m/s.

4. Method according to any one of claims 1 to 3,
**characterised in that** the outlet velocity of the fuel from the second fuel supply into the heating chamber is at least 40 m/s.

5. Method according to any one of claims 1 to 4,
**characterised in that** the combustion air is preheated in at least one recuperator to at least 600 °C.

6. Device for heating a hood furnace for the heat treatment of annealing material in a furnace chamber formed by a protective hood, wherein the protective hood is surrounded at a distance by a heating hood so that an annular heating chamber (3) is formed between the protective hood and the heating hood, the hood furnace being heated by the combustion of a fuel with at least one burner (1), which exhibits a first fuel supply (4), a combustion air supply (5), an ignition device and a burner outlet (2), which ends in a heating chamber (3) of the hood furnace, and with a control device for controlling the supply of fuel to the burner, **characterised in that**
the control device is designed so that above a limit value of the temperature in the heating chamber (3) the first fuel supply (4) is, in a second operating mode, shut off by means of a shut-off device so that in the second operating mode only combustion air from the burner outlet (2) flows into the heating chamber (3), that a second fuel supply (7) with at least one fuel outlet aperture (6) ends in the heating chamber (3), that the fuel outlet aperture (6) is directed at the axis of the combustion air flows from the burner outlet (2) so that fuel is injected into the heating chamber (3) in the direction onto the combustion air flow at an angle of between 60° and 120° relative to the axis of the combustion air flow to oxidise in the heating chamber (3) in a flameless way.

7. Device according to claim 6,
**characterised in that** between the fuel outlet aperture (6) and the burner outlet (2) there is, with regard to the centreline of the burner outlet (2), a vertical distance (a).

8. Device according to claim 7,
**characterised in that** the vertical distance (a) between the fuel outlet aperture (6) and the centreline of the burner outlet (2) is up to 700 mm.

9. Device according to any one of claims 6 to 8,
**characterised in that** there is a horizontal distance (b) between the burner outlet (2) ending in the heating chamber and the point of intersection of the axes of the combustion air flow from the burner outlet (2) and the fuel flow from the fuel outlet aperture (6) there is a horizontal distance (b).

10. Device according to claim 9,
**characterised in that** the horizontal distance (b) is up to 1000 mm.

11. Device according to any one of claims 6 to 10,
**characterised in that** the burner outlet (2) ends in the heating chamber (3) so that the combustion exhaust gases or the combustion air flow horizontally into the heating chamber (3), that the fuel outlet aperture (6) of the second fuel supply (7) end in the heating chamber (3) below the burner outlet (2) so that the fuel flow is directed upwards.

## Revendications

1. Procédé destiné au chauffage d'un four à cloche pour le traitement thermique d'un produit à recuire dans la chambre d'un four formée par une cloche de protection, la cloche de protection étant entourée avec un espacement par une cloche chauffante de manière à réaliser un espace de chauffage (3) ayant la forme d'un espace annulaire entre la cloche de protection et la cloche chauffante, le four à cloche étant chauffé par combustion d'un combustible et comporte au moins un brûleur (1), qui présente une première amenée de combustible (4), une amenée d'air de combustion (5), un moyen d'allumage et une sortie de brûleur (2) qui débouche dans un espace de chauffage (3) du four à cloche, dans lequel, dans un premier mode de fonctionnement, le combustible est amené à au moins un brûleur (1) au moyen de la première amenée de combustible (7) et l'air de combustion est amené au moyen de l'amenée d'air de combustion (5) et le mélange combustible/air de combustion est allumé au moyen du moyen d'allumage, et le gaz de combustion brûlé s'écoule de la sortie de brûleur (1) jusque dans l'espace de chauffage du four à cloche, **caractérisé en ce que**
lorsque la température dans l'espace de chauffage (3) est supérieure à une valeur limite, le débit de combustible est, dans un second mode de fonctionnement, interrompu dans la première amenée de combustible (4) de telle manière qu'uniquement l'air de combustion s'écoule de la sortie de brûleur (2) jusque dans l'espace de chauffage (3), **en ce que** le combustible est injecté dans l'espace de chauffage (3) au moyen d'une seconde amenée de combustible (2) en direction du flux d'air de combustion selon un angle compris entre 60° et 120° par rapport à l'axe du flux d'air de combustion, et est oxydé sans flamme dans l'espace de chauffage.

2. Procédé selon la revendication 1,
**caractérisé en ce que** la valeur limite correspond au moins à la température d'allumage du mélange combustible/air de combustion.

3. Procédé selon la revendication 1 ou 2,
**caractérisé en ce que** la vitesse de sortie de l'air de combustion hors du brûleur jusque dans l'espace de chauffage est au moins de 10 m/s.

4. Procédé selon une des revendications 1 à 3,
**caractérisé en ce que** la vitesse de sortie du combustible hors de la seconde amenée de combustible jusque dans l'espace de chauffage est au moins de 40 m/s.

5. Procédé selon une des revendications 1 à 4,
**caractérisé en ce que** l'air de combustion est préchauffé à au moins 600 °C dans au moins un récupérateur.

6. Dispositif destiné au chauffage d'un four à cloche pour le traitement thermique d'un produit à recuire dans la chambre d'un four formée par une cloche de protection, la cloche de protection étant entourée avec un espacement par une cloche chauffante de manière à réaliser un espace de chauffage (3) ayant la forme d'un espace annulaire entre la cloche de protection et la cloche chauffante, le four à cloche étant chauffé par combustion d'un combustible et comprend au moins un brûleur (1), qui présente une première amenée de combustible (4), une amenée d'air de combustion (5), un moyen d'allumage et une sortie de brûleur (2) qui débouche dans un espace de chauffage (3) du four à cloche, ainsi qu'un moyen de commande destiné à commander l'amenée de combustible jusqu'au brûleur,
**caractérisé en ce que**,
le moyen de commande est réalisé de manière ce que, lorsque la température dans l'espace de chauffage (3) est supérieure à une valeur limite, dans un second mode de fonctionnement, la première amenée de combustible (4) est obturée au moyen d'un obturateur de telle manière que l'air de combustion s'écoule exclusivement de la sortie de brûleur (2) jusque dans l'espace de chauffage (3), **en ce qu'**une seconde amenée de combustible (7) débouche dans l'espace de chauffage (3) avec au moins un orifice de sortie de combustible (6), **en ce que** l'orifice de sortie de combustible (6) est dirigé hors de la sortie de brûleur (2) sur l'axe du flux d'air de combustion de telle manière que le combustible est injecté dans l'espace de chauffage (3) en direction du flux d'air de combustion selon un angle compris entre 60° et 120° par rapport à l'axe du flux d'air de combustion, et est oxydé sans flamme dans l'espace de chauffage (3).

7. Dispositif selon la revendication 6,
**caractérisé en ce qu'**un intervalle vertical (a) se trouve entre l'orifice de sortie de combustible (6) et la sortie de brûleur (2) par rapport à l'axe central de la sortie de brûleur (2).

8. Dispositif selon la revendication 7,
**caractérisé en ce que** l'intervalle vertical (a) entre l'orifice de sortie de combustible (6) et l'axe central de la sortie de brûleur (2) représente jusqu'à 700 mm.

9. Dispositif selon une des revendications 6 à 8,
**caractérisé en ce qu'**un intervalle horizontal (b) se trouve entre la sortie de brûleur (2) qui débouche dans l'espace de chauffage et le croisement des axes du flux d'air de combustion hors de la sortie de brûleur (2) et du flux de combustible hors de l'orifice de sortie de combustible (6).

10. Dispositif selon la revendication 9,
**caractérisé en ce que** l'intervalle horizontal (b) représente jusqu'à 1 000 mm.

11. Dispositif selon une des revendications 6 à 10,
**caractérisé en ce que** la sortie de brûleur (2) débouche dans l'espace de chauffage (3) de telle manière que les gaz de combustion ou l'air de combustion s'écoulent horizontalement dans l'espace de chauffage (3), que l'orifice de sortie de combustible (6) de la seconde amenée de combustible (7) débouche en dessous de la sortie de brûleur (2) dans l'espace de chauffage (3) de manière que le flux de combustible est dirigé vers le haut.
